# EUROPÄISCHE PATENTSCHRIFT

(11) **EP 1 373 744 B1**
(45) Veröffentlichungstag und Bekanntmachung des Hinweises auf die Patenterteilung: **31.05.2006**
(21) Anmeldenummer: 02722249.6
(22) Anmeldetag: 20.03.2002
(51) Int. Cl.: F16C 23/00

(54) **LAGERANORDNUNG SOWIE ELEKTROANTRIEB MIT EINER SOLCHEN LAGERANORDNUNG**
BEARING ARRANGEMENT AND ELECTRIC DRIVE WITH ONE SUCH BEARING ARRANGEMENT
ENSEMBLE PALIER ET DISPOSITIF D'ENTRAINEMENT ELECTRIQUE PRESENTANT UN TEL ENSEMBLE PALIER

(30) Priorität: 07.04.2001 DE 10117573
(43) Veröffentlichungstag der Anmeldung: 02.01.2004
(73) Patentinhaber: Valeo Wischersysteme GmbH, 74321 Bietigheim-Bissingen (DE)
(72) Erfinder: WALTHER, Bernd, 74321 Bietigheim-Bissingen (DE); HUBER, Walter, 74321 Bietigheim-Bissingen (DE); RIENHARDT, Hans-Peter, 74172 Neckarsulm (DE)
(74) Vertreter: Jahn, Wolf-Diethart
(86) Internationale Anmeldenummer: PCT/EP2002/003055
(87) Internationale Veröffentlichungsnummer: WO 2002/081938

(56) Entgegenhaltungen:
- EP-A- 0 599 063
- DE-A- 4 137 607
- DE-A- 19 513 970
- US-A- 5 399 025
- US-A- 5 794 326

## Beschreibung

Die Erfindung bezieht sich auf eine Lageranordnung gemäß Oberbegriff Patentanspruch 1 sowie auf einen Elektroantrieb für Funktionselemente eines Fahrzeugs mit einer solchen Lageranordnung.

Ein "Elektroantrieb für Funktionselemente eines Fahrzeugs" ist im Sinne der Erfindung zunächst ein Antrieb für Scheibenwischer oder Scheibenwischeranlagen, aber auch ein Antrieb zum Öffnen und Schließen der Fahrzeugfenster oder eines Schiebedaches, zum Ein- und Ausklappen von Fahrzeugspiegeln usw..

Speziell bei Elektroantrieben für Scheibenwischer oder Scheibenwischeranlagen bei Fahrzeugen, die aus einem Elektromotor und einem nachgeschalteten Getriebe in Form eines Schneckenuntersetzungsgetriebes bestehen, ist es bekannt (DE 41 37 607 A1), die Anker- bzw. Motorwelle, die in das Gehäuse des Getriebes hineinreicht und dort die mit dem Schneckenrad des Schneckengetriebes zusammenwirkende Schnecke aufweist, mehrfach zu lagern, und zwar an ihrem getriebeseitigen Ende durch ein Stützlager und an ihrem motorseitigen Ende sowie zwischen den beiden Enden an einem zusätzlichen Lager im Motorgehäuse, und zwar bei der bekannten Lageranordnung an einem zusätzlichen Lager.

Bekannt ist weiterhin auch ein Elektroantrieb für Scheibenwischer bzw. Scheibenwischeranlagen (US 5,399,025), bei dem das Stützlager an dem motorseitigen Ende der Motorwelle vorgesehen ist und letztere mit zwei zusätzlichen Lagern, die als Kugellager ausgebildet sind, in dem Getriebegehäuse gelagert ist.

Ein grundsätzliches Problem besteht bei allen diesen Antrieben bzw. bei den dortigen Lageranordnungen darin, daß bei der Fertigung und/oder Montage durch Toleranzen ein Mittenversatz der Motorwelle unvermeidbar ist und dieser Mittenversatz dann durch entsprechende Positionierung und Fixierung des Stützlagers ausgeglichen werden muß. Um dies in einfacher Weise zu ermöglichen, ist bei den bekannten Lageranordnungen das Stützlager in einem Raum des Getriebegehäuses oder des Motorgehäuses aufgenommen und dort durch eine von außen her durch die "erste" Öffnung eingebrachte Füll- und Fixiermasse fixiert.

Nachteilig ist bei diesen bekannten Ausbildungen aber, daß dennoch die Montage, insbesondere auch des Stützlagers relativ aufwendig ist und darüber hinaus die Gefahr besteht, daß Füllmasse in den Innenraum des jeweiligen Gehäuses gelangt.

Aufgabe der Erfindung ist es daher, eine Lageranordnung zu schaffen, die diese Nachteile vermeidet, d. h. eine vereinfachte Montage, insbesondere auch des Stützlagers sowie eine zuverlässige und fehlerfreie Fixierung des Stützlagers ermöglicht. Zur Lösung dieser Aufgabe ist eine Lageranordnung entsprechend dem Patentanspruch 1 ausgebildet. Ein Elektroantrieb ist entsprechend dem Patentanspruch 18 ausgeführt.

Die erfindungsgemäße Lageranordnung ist so ausgebildet, daß das Stützlager nach dem Zusammenbau des Antriebs, d. h. des Motors und des Getriebes, von außen her auf das betreffende Ende der Anker- bzw. Motorwelle aufgesetzt werden kann, und zwar durch die erste Öffnung mit großem Öffnungsquerschnitt hindurch. Über dieselbe Öffnung kann dann in vereinfachter Weise die Füll- und Fixiermasse zum Fixieren des Stützlagers eingebracht werden. Da weiterhin die zur Aufnahme des Stützlagers dienende Kammer durch die von dem Wandabschnitt gebildete Schulter (Ringschulter), gegen die das Stützlager stirnseitig dicht anliegt, gegenüber dem anschließenden Innenraum des Motors oder Getriebes abgedichtet ist, ist auch ein Eintreten von Füllmasse in diesen Innenraum wirksam verhindert.

Das Stützlager ist bei der Erfindung vorzugsweise als reines Radiallager ausgeführt, während axiale Kräfte von den zusätzlichen Lagern aufgenommen werden.

Weiterbildungen der Erfindung sind Gegenstand der Unteransprüche. Die Erfindung wird im folgenden anhand der Figuren an einem Ausführungsbeispiel näher erläutert. Es zeigen:
- Fig.1: in vereinfachter schematischer Darstellung und im Schnitt ein Motorgehäuse und ein angeschlossenes Getriebegehäuse eines Elektroantriebs, nämlich eines Scheibenwischerantriebs, zusammen mit einer im Motorgehäuse und im Getriebegehäuse gelagerten Anker- oder Motorwelle;
- Fig. 2 und 3: jeweils in vereinfachter Darstellung eine Lagerbuchse, die durch Einbetten in einer Füll- oder Fixiermasse in unterschiedlicher Ausrichtung bzw. Positionierung in einem als Lagerträger ausgebildeten Abschnitt des Getriebegehäuses fixiert ist.

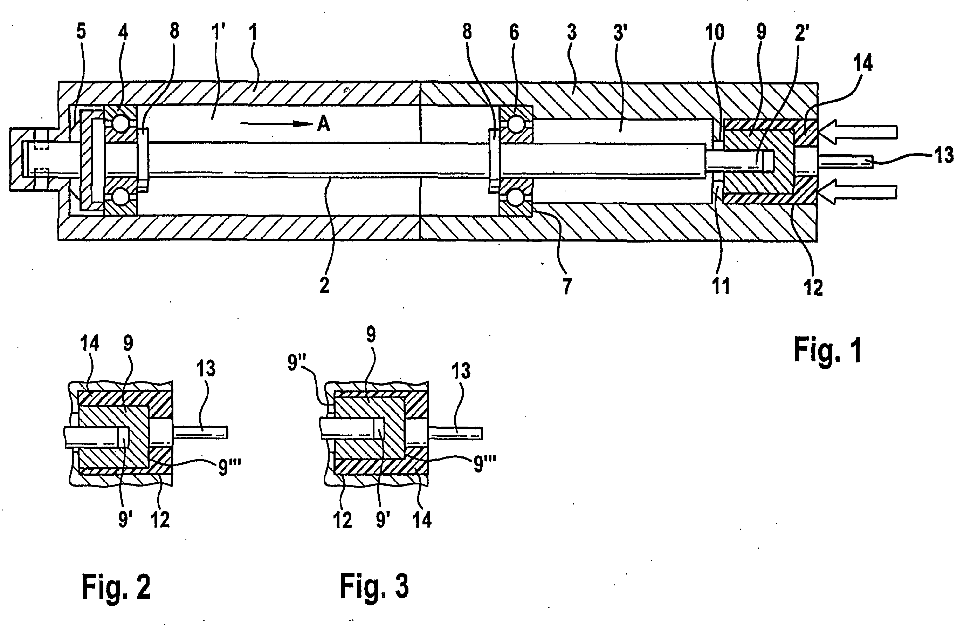

Die Figur 1 zeigt in schematischer Darstellung den Elektroantrieb für einen Scheibenwischer eines Fahrzeugs, und zwar bestehend aus einem Elektromotor, von dem lediglich das Motorgehäuse 1 und die Anker- bzw. Motorwelle 2 wiedergegeben sind, sowie aus einem an den Motor anschließenden Getriebe, das als Schneckenuntersetzungsgetriebe ausgebildet ist. Von diesem ist im wesentlichen nur das Getriebegehäuse 3 und der sich im Innenraum 3' dieses Gehäuses erstreckende Teil der Motorwelle 2 gezeigt, der (Teil) dort mit der nicht dargestellten Schnecke des Schneckenuntersetzungsgetriebes versehen oder als Schnecke ausgebildet ist.

Im Innenraum 1' des Motorgehäuses 1 ist die Motorwelle 2 an ihrem motorseitigen Ende mittels eines Kugellagers 4 drehbar gelagert. Auf den mit der Motorwelle 2 nicht mitdrehenden äußeren Ring des Kugellagers 4 wirkt eine Federanordnung 5 ein, die die Motorwelle 2 in axialer Richtung entsprechend dem Pfeil A federnd vorspannt, und zwar in Richtung auf das Getriebegehäuse 3. In dem Getriebegehäuse 3 ist die Motorwelle 2 an ihrem aus dem Motor vorstehenden Teil mittels eines Kugellagers 6 drehbar gelagert, dessen mit der Motorwelle 2 nicht mitdrehender äußerer Ring sich axial an einem im Getriebegehäuse 3 gebildeten Bund 7 abstützt. Über Abstützelemente, beispielsweise Federringe 8 stützt sich die Motorwelle 2 jeweils an dem mit dieser Welle umlaufenden Teil der Kugellager 4 und 6 so ab, daß die von der Federanordnung 5 erzeugte Federkraft über die Motorwelle 2 auf das Kugellager 6 übertragen wird.

An ihrem dem Motor bzw. dem Motorgehäuse 1 entfernt liegenden Ende ist die Motorwelle 2 mit einem Wellenabschnitt 2' zusätzlich in einer Lagerbuchse 9 gelagert, die bei der dargestellten Ausführungsform als Radiallager wirkt und aus einem für eine Lagerbuchse oder ein Gleitlager geeigneten Material gefertigt ist. Die Lagerbuchse 9 ist an ihrem Umfang kreiszylinderförmig ausgebildet und besitzt eine Lagerbohrung 9' für den Wellenabschnitt 2', die an der einen Stirnseite 9'' offen und an der anderen Stirnseite 9''' verschlossen ist. Wie die Figur 1 zeigt, ist das freie Ende des Wellenabschnittes 2' von dem geschlossenen Ende der Lagerbohrung 9' beabstandet, so daß die Lagerbuchse 9 ausschließlich als Radiallager wirkt.

Wie die Figur 1 weiterhin zeigt, besitzt der Wellenabschnitt 2' einen im Vergleich zum restlichen Motorwelle 2 reduzierten Durchmesser. Mit diesem Wellenabschnitt 2' reicht die Motorwelle 2 aus dem Innenraum 3' durch eine Öffnung 10 in einen Wandabschnitt 11 in eine Kammer 12, die am Getriebegehäuse 3 gebildet und an ihrer dem Wandabschnitt 11 gegenüberliegenden Seite offen ist. Der Wandabschnitt 11 erstreckt sich in einer Ebene senkrecht oder im wesentlichen senkrecht zur Achse der Motorwelle 2 und bildet zumindest im Bereich der Kammer 12 eine plane oder leicht konvex gewölbte Fläche, die in der nachstehend noch näher beschriebenen Weise als Anlage- oder Abstützfläche für die ebenfalls plane oder leicht konkav gewölbte Stirnseite 9'' der Lagerbuchse 9 dient. Der Querschnitt der Öffnung 10 ist wesentlich größer als der Durchmesser des Wellenabschnittes 2', aber kleiner als der Außendurchmesser der Lagerbuchse 9. Die Kammer 12 besitzt senkrecht zur Achse der Motorwelle 2 einen kreiszylinderförmigen Querschnitt, und zwar mit einem Durchmesser der größer ist als der Außendurchmesser der Lagerbuchse 9.

Beim Montieren des Antriebs wird zunächst der Motor mit der Motorwelle 2 im Motorgehäuse 1 montiert. Anschließend wird auf das Motorgehäuse 1 das Getriebe mit dem Getriebegehäuse 3 aufgesetzt und an dem Motorgehäuse 1 in einer geeigneten Weise beispielsweise durch Anflanschen befestigt, so daß dann die Motorwelle 2 auch mit dem Kugellager 6 im Getriebegehäuse 3 gelagert ist und mit ihrem Wellenabschnitt 2' durch die Öffnung 10 in die Kammer 12 hineinreicht.

In einem weiteren Montageschritt wird dann die Lagerbuchse 9 mit ihrer Stirnfläche 9" voraus auf den Wellenabschnitt 2' aufgesetzt. Dies kann von außen erfolgen, da die Kammer 12 an der Außenseite des Getriebegehäuses 3 offen ist und der Öffnungsquerschnitt größer ist als der Außendurchmesser der Lagerbuchse 9. Durch einen gefederten Stempel 13 wird dann die Lagerbuchse 9 mit ihrer Stirnfläche 9 " mit definierter Kraft dicht gegen die der Kammer 12 zugewandte Fläche der Wand 11 bzw. der von dieser Wand gebildeten und die Öffnung 10 umschließenden Ringschulter angedrückt, wobei die Lagerbuchse 9 sich auf der Motorwelle 2 ausrichtet und somit auch ein eventueller Mittenversatz der Motorwelle 2 im Getriebegehäuse 3 ausgeglichen ist. Die Stirnseite 9''' bildet dabei die Anlagefläche für den Stempel 13. Anschließend wird der von der Lagerbuchse 9 und dem Stempel 13 nicht eingenommene Raum der Kammer 12 zum Fixieren der_Lagerbuchse 9 mit einer geeigneten Fixier- und Füllmasse 14, beispielsweise mit einem geeigneten Kunststoff oder mit einer niedrig schmelzenden Metall-Legierung 14 ausgefüllt. Die axiale Länge der Lagerbuchse 9 ist kürzer als die entsprechende axiale Länge der Kammer 12, so daß die Lagerbuchse 9 vollständig in der Kammer 12 aufgenommen und auch an der Stirnseite 9''' von der Fixier- und Füllmasse 14 unschlossen ist. Nach dem Fixieren der Lagerbuchse 9 kann der Stempel 13 wieder entfernt werden.

Die beschriebene Ausbildung hat zahlreiche Vorteile. So kann das vorbeschriebene Montieren und Fixieren der Lagerbuchse 9 von der Außenseite des Getriebegehäuses 3 erfolgen, und zwar vereinfacht durch die relativ große Öffnung der Kammer 12. Durch die von der Wand 11 gebildete Schulter ergibt sich für die auf den Wellenabschnitt 2' aufgesetzte und mit dem Stempel 13 angedrückte Lagerbuchse 9 eine genau definierte Lage. Die von dem Stempel 13 ausgeübte Kraft wird nicht auf die Lagerwelle 2 übertragen, d. h. diese Kraft führt zu keiner axialen Kraft in der Welle 2. Durch die dicht gegen die Wand 11 anliegende Stirnfläche 9'' ist die Öffnung 10 gegen ein Eintreten der Füllmasse 14 in den Innenraum 3' des Getriebegehäuses 3 zuverlässig abgedichtet.

Die Figuren 2 und 3 zeigen zwei extreme Lagen oder Positionen der Lagerbuchse 9 zum Ausgleich eines Mittenversatzes.

Die Erfindung wurde voranstehend an einem Ausführungsbeispiel beschrieben. Es versteht sich, daß zahlreiche Änderungen sowie Abwandlungen möglich sind, ohne daß dadurch der der Erfindung zugrundeliegende Erfindungsgedanke verlassen wird. So ist es beispielsweise möglich, daß das Motorgehäuse und das Getriebegehäuse zumindest teilweise von einem gemeinsamen Gehäuse gebildet sind.

### Bezugszeichenliste

- 1: Motorgehäuse
- 1': Innenraum des Motorgehäuses
- 2: Motorwelle
- 2': Motorwellenabschnitt
- 3: Getriebegehäuse
- 3': Innenraum des Getriebegehäuses
- 4: Kugellager
- 5: Federanordnung
- 6: Kugellager
- 7: Bund
- 8: Federring
- 9: Lagerbuchse
- 9': Lagerbohrung
- 9" , 9" ': Stirnseite
- 10: Öffnung
- 11: Wandabschnitt
- 12: Kammer
- 13: Stempel
- 14: Füllmasse

- A: Federkraft

## Patentansprüche

1. Lageranordnung einer Anker- oder Motorwelle (2) eines einen Elektromotor und ein Getriebe aufweisenden Elektroantriebs für Funktionselemente eines Fahrzeugs, insbesondere Scheibenwischer, wobei die Welle in einem Motorgehäuse (1) sowie auch in einem Getriebegehäuse (3) gelagert ist, mit wenigstens einem die Welle (2) an einem Ende in einem der Gehäuse abstützenden Stützlager (9), welches in einem Raum (12) des Gehäuses (3) durch eine eingebrachte Fixier- oder Füllmasse (14) über wenigstens eine erste, an der Außenseite des Gehäuses (3) mündende Öffnung fixiert ist, **dadurch gekennzeichnet, daß** am Übergang zwischen dem Raum (12) und dem restlichen Innenraum (3') des Gehäuses (3) eine eine zweite Öffnung (10) umschließende Schulter (11) gebildet ist, daß die Welle (2) durch die zweite Öffnung (10) in den Raum (12) hineinreicht, daß das Stützlager (9) mit einer dem restlichen Innenraum (3') zugewandten Stirnfläche (9") die zweite Öffnung (10) verschließend gegen die Schulter (11) anliegt, und daß die erste Öffnung einen Öffnungsquerschnitt aufweist, der wenigstens gleich dem maximalen Außenquerschnitt des Stützlagers (9) ist.

2. Lageranordnung nach Anspruch 1, **dadurch gekennzeichnet, daß** der Raum (12) von dem restlichen Innenraum (3') des Gehäuses (3) durch einen die Schulter bildenden Wandabschnitt (11) getrennt ist, daß in dem Wandabschnitt (11) die zweite Öffnung (10) vorgesehen ist, deren Durchmesser kleiner ist als der Durchmesser der Stirnfläche (9") des Stützlagers (9).

3. Lageranordnung nach Anspruch 1 oder 2, **dadurch gekennzeichnet, daß** das Stützlager (9) am getriebeseitigen Ende der Welle (2) am Getriebegehäuse (3) vorgesehen ist.

4. Lageranordnung nach einem der vorhergehenden Ansprüche, **dadurch gekennzeichnet, daß** die Welle (2) mit wenigstens zwei weiteren Lagern (4, 6) im Motorgehäuse (1) und/oder im Getriebegehäuse (3) gelagert ist.

5. Lageranordnung nach Anspruch 4, **dadurch gekennzeichnet, daß** die Welle (2) mit ihrem motorseitigen Ende mit einem zusätzlichen Lager (4) im Motorgehäuse (1) und mit einem weiteren zusätzlichen Lager (6) im Getriebegehäuse (3) gelagert ist.

6. Lageranordnung nach einem der vorhergehenden Ansprüche, **dadurch gekennzeichnet, daß** die weiteren Lager (4, 6) Kugellager sind.

7. Lageranordnung nach einem der vorhergehenden Ansprüche, **dadurch gekennzeichnet, daß** das Stützlager (9) ein Radiallager ist.

8. Lageranordnung nach einem der vorhergehenden Ansprüche, **dadurch gekennzeichnet, daß** das Stützlager (9) ein Radial- und Axiallager ist.

9. Lageranordnung nach einem der vorhergehenden Ansprüche, **dadurch gekennzeichnet, daß** das Stützlager als Gleitlager ausgebildet ist.

10. Lageranordnung nach einem der vorhergehenden Ansprüche, **dadurch gekennzeichnet, daß** das Stützlager eine Lagerbuchse (9) aufweist.

11. Lageranordnung nach Anspruch 10, **dadurch gekennzeichnet, daß** die Lagerbuchse (9) ohne einen weiteren Lagerträger das Stützlager bildet und in dem Raum (12) des Gehäuses (3) durch die Fixier oder Füllmasse (14) fixiert ist.

12. Lageranordnung nach einem der vorhergehenden Ansprüche, **dadurch gekennzeichnet, daß** die Lagerbuchse (9) eine Lagerbohrung (9') aufweist, die an einer Stirnseite (9") der Lagerbuchse (9) offen und an der anderen Stirnseite (9"') verschlossen ist.

13. Lageranordnung nach einem der vorhergehenden Ansprüche, **dadurch gekennzeichnet, daß** die Welle (2) einen Wellenabschnitt (2') aufweist, der einen reduzierten Querschnitt besitzt und mit dem die Welle (2) durch die zweite Öffnung (10) in den Raum (12) hineinreicht.

14. Lageranordnung nach einem der vorhergehenden Ansprüche, **dadurch gekennzeichnet, daß** die zweite Öffnung (10) einen Querschnitt besitzt, der größer ist als der Querschnitt der Welle (2) im Bereich dieser Öffnung.

15. Lageranordnung nach einem der vorhergehenden Ansprüche, **dadurch gekennzeichnet, daß** die axiale Länge des Stützlagers (9) kleiner ist als die Abmessung des Raumes (12) in der gleichen Achsrichtung.

16. Lageranordnung nach einem der vorhergehenden Ansprüche, **dadurch gekennzeichnet, daß** die Fixier- oder Füllmasse ein Kunststoff oder eine niedrig schmelzende Metall-Legierung ist.

17. Lageranordnung nach einem der vorhergehenden Ansprüche, **dadurch gekennzeichnet, daß** das Motorgehäuse (1) sowie das Getriebegehäuse (3) zumindest in Teilbereichen Bestandteil eines gemeinsamen oder einstückigen Gehäuses sind.

18. Elektoantrieb mit einem Elektromotor und einem Getriebe, beispielsweise mit Schneckenuntersetzungsgetriebe, speziell zur Verwendung als Antrieb von Funktionselementen bei Fahrzeugen, mit einer Lageranordnung nach einem der vorhergehenden Ansprüche.

## Claims

1. A bearing assembly for a rotor or main shaft (2) of an electric drive, comprising an electric motor and gearbox, for functional elements of a vehicle, especially windscreen wipers, in which this shaft is mounted in a motor housing (1) as well as in a gearbox housing (3), with at least one support bearing (9) supporting the shaft (2) at one end in one of the housings, the supporting bearing being fixed in a space (12) of the housing (3) by a fixing or filling compound (14) introduced through at least one first hole discharging onto the outside of the housing (3); **characterised in that** a shoulder (11) surrounding a second hole (10) is formed at the transition between the space (12) and the remainder of the interior (3') of the housing (3), **in that** the shaft (2) extends through the second hole (10) into the space (12); **in that** the support bearing (9), with an end face (9") facing the remainder of the interior (3'), abuts against the shoulder (11), closing the second hole (10) and **in that** the first hole has an opening cross section which at least equals the maximal outer cross section of the support bearing (9).

2. A bearing assembly in accordance with Claim 1 **characterised in that** the space (12) is separated from the remainder of the interior (3') of the housing (3) by a wall section (11) forming the shoulder and **in that** the second hole (10) is provided in the wall section (11) with a diameter smaller than the diameter of the end face (9'') of the support bearing (9).

3. A bearing assembly under Claim 1 or 2, **characterised in that** the support bearing (9) is provided at the gearbox housing (3) at the gearbox facing end of the shaft (2).

4. A bearing assembly in accordance with one of the preceding claims, **characterised in that** the shaft (2) is mounted with at least two further bearings (4, 6) in the motor housing (1) and/or in the gearbox housing (3).

5. A bearing assembly in accordance with Claim 4, **characterised in that** the shaft (2) is mounted by its motor facing end with an additional bearing (4) in the motor housing (1) and by further additional bearing (6) in the gearbox housing (3).

6. A bearing assembly in accordance with one of the preceding claims, **characterised in that** the further bearings (4, 6) are ball bearings.

7. A bearing assembly in accordance with one of the preceding claims, **characterised in that** the support bearing (9) is a radial bearing.

8. A bearing assembly in accordance with one of the preceding claims, **characterised in that** the support bearing (9) is a radial and axial bearing.

9. A bearing assembly in accordance with one of the preceding claims, **characterised in that** the support bearing is formed as a friction bearing.

10. A bearing assembly in accordance with one of the preceding claims, **characterised in that** the support bearing has a bearing bushing (9).

11. A bearing assembly in accordance with claim 10, **characterised in that** the bearing bushing (9) forms the support bearing without another bearing support and is fixed in the space (12) of the housing (3) by the fixing or filling compound (14).

12. A bearing assembly in accordance with one of the preceding claims, **characterised in that** the bearing bushing (9) comprises a bearing bore (9') which is open on one end face (9'') of the bearing bushing (9) and closed on the other end face (9''').

13. A bearing assembly in accordance with one of the preceding claims, **characterised in that** the shaft (2) has a shaft section (2') which has a reduced cross section and with which the shaft (2) extends into the space (12) through the second hole (10).

14. A bearing assembly in accordance with one of the preceding claims, **characterised in that** the second hole (10) has a cross section which is larger than the cross section of the shaft (2) in the area of this hole.

15. A bearing assembly in accordance with one of the preceding claims, **characterised in that** the axial length of the support bearing (9) is smaller than the dimension of the space (12) in the same axial direction.

16. A bearing assembly in accordance with one of the preceding claims, **characterised in that** the fixing or filling compound is a plastic or an alloy with a low melting point.

17. A bearing assembly in accordance with one of the preceding claims, **characterised in that** the motor housing (1) as well as the gearbox housing (3) form, at least in part, a common or one-piece housing.

18. An electric drive with an electric motor and gearbox, for example with worm reduction gear, particularly for use as a drive for functional elements in vehicles, with a bearing assembly in accordance with one of the preceding claims.

## Revendications

1. Agencement de paliers d'un arbre d'induit ou de moteur (2) d'un entraînement électrique présentant un moteur électrique et un engrenage pour des éléments fonctionnels d'un véhicule, en particulier des essuie-glaces, moyennant quoi l'arbre est disposé dans un carter de moteur (1) et également dans un carter d'engrenage (3), avec au moins un palier de support (9) soutenant l'arbre (2) à une extrémité dans l'un des carters, lequel palier est fixé dans un espace (12) du carter (3) par une masse de fixation ou de remplissage (14) introduite par l'intermédiaire d'au moins une première ouverture débouchant sur le côté extérieur du carter (3), **caractérisé en ce que**, au niveau de la zone de transition entre l'espace (12) et le reste de l'enceinte intérieure (3') du carter (3), est formé un épaulement (11) entourant une deuxième ouverture (10), **en ce que** l'arbre (2) pénètre dans l'espace (12) par la deuxième ouverture (10), **en ce que** le palier de support (9) , avec une surface frontale (9") orientée vers le reste de l'enceinte intérieure (3'), repose contre l'épaulement (11) en fermant la deuxième ouverture (10), et **en ce que** la première ouverture a une section d'ouverture qui est au moins égale à la section extérieure maximale du palier de support (9).

2. Agencement de paliers selon la revendication 1, **caractérisé en ce que** l'espace (12) est séparé du reste de l'enceinte intérieure (3') du carter (3) par un tronçon de paroi (11) formant l'épaulement, **en ce qu'**il est prévu dans le tronçon de paroi (11) une deuxième ouverture (10) dont le diamètre est inférieur au diamètre de la surface frontale (9") du palier de support (9).

3. Agencement de paliers selon l'une quelconque des revendications 1 ou 2, **caractérisé en ce que** le palier de support (9) est prévu sur l'extrémité du côté engrenage de l'arbre (2) sur le carter d'engrenage (3).

4. Agencement de paliers selon l'une quelconque des revendications précédentes, **caractérisé en ce que** l'arbre (2) est disposé avec au moins deux autres paliers (4, 6) dans le carter de moteur (1) et/ou dans le carter d'engrenage (3).

5. Agencement de paliers selon la revendication 4, **caractérisé en ce que** l'arbre (2) est disposé, à son extrémité du côté du moteur, avec un palier supplémentaire (4) dans le carter de moteur (1) et, avec un autre palier supplémentaire (6), dans le carter d'engrenage (3).

6. Agencement de paliers selon l'une quelconque des revendications précédentes, **caractérisé en ce que** les autres paliers (4, 6) sont des paliers à billes.

7. Agencement de paliers selon l'une quelconque des revendications précédentes, **caractérisé en ce que** le palier de support (9) est un palier radial.

8. Agencement de paliers selon l'une quelconque des revendications précédentes, **caractérisé en ce que** le palier de support(9) est un palier radial et axial.

9. Agencement de paliers selon l'une quelconque des revendications précédentes, **caractérisé en ce que** le palier de support est configuré sous la forme d'un palier lisse.

10. Agencement de paliers selon l'une quelconque des revendications précédentes, **caractérisé en ce que** le palier de support présente un coussinet (9).

11. Agencement de paliers selon la revendication 10, **caractérisé en ce que** le coussinet (9) forme le palier de support sans autre support de palier et est fixé dans l'espace (12) du carter (3) par l'intermédiaire de la masse de fixation ou de remplissage (14).

12. Agencement de paliers selon l'une quelconque des revendications précédentes, **caractérisé en ce que** le coussinet (9) présente un alésage de palier (9'), qui est ouvert au niveau d'un côté frontal (9") du coussinet (9) et est fermé au niveau de l'autre côté frontal ( 9''') .

13. Agencement de paliers selon l'une quelconque des revendications précédentes, **caractérisé en ce que** l'arbre (2) présente un tronçon d'arbre (2'), qui a une section réduite et avec lequel l'arbre (2) pénètre par la deuxième ouverture (10) dans l'espace (12).

14. Agencement de paliers selon l'une quelconque des revendications précédentes, **caractérisé en ce que** la deuxième ouverture (10) a une section qui est supérieure à la section de l'arbre (2) dans la zone de cette ouverture.

15. Agencement de paliers selon l'une quelconque des revendications précédentes, **caractérisé en ce que** la longueur axiale du palier de support (9) est inférieure à la dimension de l'espace (12) dans la même direction axiale.

16. Agencement de paliers selon l'une quelconque des revendications précédentes, **caractérisé en ce que** la masse de fixation ou de remplissage est une matière plastique ou un alliage métallique fondant peu.

17. Agencement de paliers selon l'une quelconque des revendications précédentes, **caractérisé en ce que** le carter de moteur (1) ainsi que le carter d'engrenage (3) sont, au moins dans des zones partielles, des composants d'un carter commun ou en une seule pièce.

18. Entraînement électrique avec un moteur électrique et un engrenage, par exemple un réducteur à vis sans fin, en particulier destiné à être utilisé comme entraînement d'éléments fonctionnels dans des véhicules, avec un agencement de paliers selon l'une quelconque des revendications précédentes.
